# FASCICULE DE BREVET EUROPEEN

(11) **EP 2 791 859 B1**
(45) Date de publication et mention de la délivrance du brevet: **22.06.2016**
(21) Numéro de dépôt: 12808307.8
(22) Date de dépôt: 11.12.2012
(51) Int. Cl.: G06K 7/00

(54) **DISPOSITIF DE DÉCHARGE ÉLECTROSTATIQUE**
ELEKTROSTATISCHE ENTLADEVORRICHTUNG
ELECTROSTATIC DISCHARGE DEVICE

(30) Priorité: 12.12.2011 FR 1161502
(43) Date de publication de la demande: 22.10.2014
(73) Titulaire: Ingenico Group, 75015 Paris (FR)
(72) Inventeur: BARNERON, Sylvain, 69800 St Priest (FR); SOUBIRANE, Alain, 26500 Bourg Les Valence (FR)
(74) Mandataire: Vidon Brevets & Stratégie
(86) Numéro de dépôt international: PCT/EP2012/075115
(87) Numéro de publication internationale: WO 2013/087641

(56) Documents cités:
- EP-A1- 0 608 814
- WO-A2-2011/081870
- JP-A- 63 222 364

## Description

### 1. Domaine de l'invention

L'invention se rapporte à un dispositif de décharge d'électricité statique. L'invention trouve une application dans les dispositifs électroniques qui comprennent des parties amovibles ou encore dans les dispositifs électroniques qui comprennent des logements de réception d'autres dispositifs. De tels dispositifs électroniques peuvent être des lecteurs de cartes à puces ou à bandes magnétique, des lecteurs USB, etc.

L'invention trouve une application particulière dans les terminaux de paiement ou les terminaux d'identification ou d'authentification dans lesquels une carte à puce ou à bande magnétique est insérée. L'invention trouve également une application intéressante dans les terminaux acceptant des cartes comprenant une antenne sans contact. Ou incorporant des éléments conducteurs capables d'emmagasiner de l'électricité statique.

### 2. Art Antérieur

La décharge de l'électricité statique contenue dans des cartes à puces (ou des dispositifs amovibles tels que des clés USB) est un problème auquel de nombreuses solutions ont été proposée.

Par exemple la demande de brevet US20090253301 du 08 octobre 2009 décrit un connecteur de carte SIM avec une protection contre les décharges électrostatique (ESD). Il y est décrit un connecteur de carte SIM qui comprend un boîtier de connecteur avec une pluralité de passages de contact dans lequel une pluralité de bornes de contact est présente. Le connecteur de carte SIM comprend en outre un circuit imprimé (IC) fixé sur une surface inférieure du boîtier du connecteur et une pluralité de billes de soudure prises en sandwich entre le circuit imprimé et les contacts et mis en contact avec les bornes de contact. Cet agencement permet de décharger l'électricité statique de la puce de la carte à puce lorsqu'elle entre en contact avec les bornes de contact. Cet agencement présente cependant l'inconvénient d'être intégré au connecteur et présente l'inconvénient d'être limité à la décharge de l'électricité statique de la puce.

La demande de brevet WO200150550 du 12 juillet 2001 propose également une solution à ce problème d'électricité statique. Plus particulièrement, cette demande de brevet décrit un réceptacle de carte mémoire comprenant au moins un contact pour entrer en contact électrique avec une carte mémoire. Le réceptacle de carte mémoire possède au moins un élément de contact à la terre, pour protéger les équipements électroniques contre les décharges statiques électro (EDD), lequel élément de contact à la terre est en contact avec chaque contact quand il n'y a pas de carte mémoire inséré dans le réceptacle de carte mémoire. Là encore, cet agencement présente l'inconvénient d'être intégré au connecteur et présente l'inconvénient d'être limité à la décharge de l'électricité statique de la puce.

La demande de brevet européen EP 0 608 814 A1 décrit un mécanisme d'éjection de carte à mémoire, du connecteur électrique d'un lecteur de carte, comprenant une protection contre les décharges électrostatique (ESD) formée d'une plaque de métal.

Les demandes de brevet US2005260866, DE10339281, WO03021719 et WO9733317 décrivent également des solutions pour permettre une décharge de l'électricité statique contenue dans une puce d'une carte à puce ou d'une carte SIM (carte destinée à être insérée dans un terminal de communication comme un terminal mobile par exemple). Toutes ces solutions présentent l'inconvénient d'être intégrées au connecteur et présentent l'inconvénient d'être limité à la décharge de l'électricité statique de la puce.

Or, outre le problème de décharge de l'électricité statique de la puce, il se pose également le problème de la décharge de l'électricité statique de l'ensemble de la carte. Ce problème est d'autant plus important avec les nouvelles cartes qui intègrent, outre une puce et une bande magnétique, une antenne dite « sans contact » qui permet par exemple de réaliser des opérations par communication NFC (de l'anglais pour « Near Filed Contact »). Ce type de problème est également présent avec les cartes « foil », c'est-à-dire des cartes qui possèdent des films plus ou moins conducteurs à l'intérieur ou à l'extérieur de la carte. Dès lors, il n'est pas possible de se contenter de décharger la puce de la carte. L'on trouve aussi des cartes réalisée entièrement en métal qui peuvent alors présenter un fort potentiel capacitif.

De plus, l'introduction des nouvelles cartes intégrant une antenne NFC pose problème aux terminaux anciens. En effet, ces terminaux soit ne disposent pas du tout de moyens de décharge de l'électricité statique de la carte, soit disposent de moyens de décharge qui sont limités à la décharge de la puce. Or, il n'est pas envisageable, en l'état de remplacer tous les terminaux existants afin de régler ce problème, pas plus qu'il n'est envisageable économiquement de modifier physiquement les terminaux existants, en changeant le connecteur de carte à mémoire existant par un nouveau modèle de connecteur de carte à mémoire. Ceci entrainerait nécessairement une nouvelle validation normative des terminaux.

### 3. Résume de l'Invention

L'invention permet de solutionner ce problème de l'art antérieur. En effet, l'invention porte sur un dispositif amovible de décharge. La particularité de ce dispositif, outre qu'il est amovible, est qu'en outre il est configuré pour être inséré dans tout terminal existant, sans qu'il soit nécessaire de procéder à une nouvelle validation de ce terminal une fois le dispositif inséré.

On précise également que ce type de solution peut être utilisé pour des terminaux en cours de développement, l'intérêt étant toujours économique puisque la solution de l'invention évite d'utiliser une solution « tout en un » particulièrement couteuse (comme présentée préalablement). Cela évite également le choix d'un nouveau connecteur (on conserve tous les volumes d'achats sur une référence et on évite une validation très longue et fastidieuse sur un composant clé).

De plus, le dispositif de l'invention permet de décharger tant la charge électrostatique de la puce contenue dans la carte que la charge électrostatique de la carte elle-même, particulièrement lorsque cette carte comprend une antenne de communication en champ proche.

Plus particulièrement, dans un mode de réalisation l'invention se rapporte à un dispositif de décharge électrostatique selon la revendication 1. Selon l'invention, ledit dispositif de décharge comprend des moyens d'insertion dans ledit logement de lecture postérieurement au montage dudit terminal de lecture.

Selon une caractéristique particulière, ledit dispositif de décharge électrostatique est en outre conformé de sorte que l'extraction dudit dispositif de décharge électrostatique, postérieurement à son insertion, nécessite le démontage dudit terminal de lecture.

Selon un mode de réalisation particulier, lorsque ledit élément électronique amovible est une carte à puce et que ledit logement offre un moyen d'accès à un lecteur de carte à mémoire, ledit dispositif de décharge comprend au moins une zone de décharge conformée pour entrer en contact avec une portion de la surface de la puce de ladite carte à puce.

Selon un mode de réalisation particulier, ledit dispositif comprend en outre au moins une zone de décharge conformée pour entrer en contact avec une portion de la tranche de ladite carte à puce.

Selon un mode de réalisation particulier, ledit dispositif comprend en outre au moins un moins un ergot de blocage dudit dispositif de sorte que l'extraction dudit dispositif de décharge électrostatique, postérieurement à son insertion, nécessite le démontage dudit terminal de lecture.

L'invention concerne également un procédé de montage d'un dispositif de décharge électrostatique tel que décrit préalablement. Selon l'invention, un tel procédé comprend une étape d'insertion dudit dispositif dans un espace libre entre un lecteur de carte à mémoire et un circuit électronique et une étape de blocage dudit dispositif à l'aide d'au moins un ergot de blocage dudit dispositif.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est une vue schématique du positionnement du dispositif dans un terminal vue de côté ;
- la figure 2 est également une vue schématique du positionnement du dispositif dans un terminal vue de dessus.
- la figure 3 est une vue en trois quart supérieure du dispositif selon un mode de réalisation ;
- la figure 4 est une vue en trois quart supérieure du dispositif selon un mode de réalisation ;
- la figure 5 est une vue de face cotée du dispositif selon un mode de réalisation ;
- la figure 6 est une vue de dessus cotée du dispositif selon un mode de réalisation ;
- la figure 7 est une vue schématique du positionnement du dispositif dans un terminal vue de côté, comprenant l'insertion d'une carte à puce.

### 5. Description d'un mode de réalisation

### 5.1. Rappel du principe de l'invention

L'invention repose sur l'idée qu'il est nécessaire d'offrir à des terminaux, même vieillissants, des capacités d'évacuation de la charge électrostatique contenue dans les cartes à puces insérées dans ces terminaux et ce afin d'éviter que ces terminaux subissent des dommages irréparables. Les inventeurs ont donc eu l'idée de créer un dispositif qui permette de remplir cette fonction. À la différence des dispositifs de l'art antérieurs, cependant, qui sont intégrés par construction, au sein du lecteur de carte à mémoire, le dispositif de l'invention peut être inséré dans un terminal existant. Plus particulièrement, le dispositif de l'invention est inséré par la fente du lecteur de carte à puce : cette caractéristique permet de ne pas avoir à modifier le terminal de paiement. Il s'agit d'un avantage indéniable puisque l'on réduit alors fortement le coût d'intervention sur le terminal pour réaliser la mise à niveau.

De plus, le dispositif de l'invention peut également être mis en place au moment du montage de l'appareil. Dans ce cas, à la différence des techniques de l'art antérieur, le dispositif de l'invention est un dispositif externe au lecteur de cartes, qui ne nécessite pas de montage complexe.

Le dispositif de l'invention permettant de réaliser cette décharge électrostatique est positionné à l'entrée du connecteur carte à mémoire.

Une partie du dispositif est mis en contact avec un plan de masse du terminal et l'autre partie vient frotter sur la carte à puce.

On vient ainsi décharger la carte, au moment de son insertion, préalablement à l'entrée en contact de la puce avec les contacts du lecteur de cartes à mémoire.

Selon une caractéristique particulière, le dispositif est conformé de sorte que la tranche de la carte entre également en contact avec au moins une portion du dispositif. En effet, cette caractéristique répond à la problématique de charge électrostatique qui se développe dans certaines cartes particulières, appelées cartes « foil ». Cette technologie de carte à mémoire dite « foil » comprend une couche métallique. L'objet de cette couche est soit esthétique soit technique. La couche métallique peut être en surface de la carte ou prise entre d'autres couches (par exemple des couches en plastique).

Cette caractéristique est également utile pour les cartes présentant un caractère capacitif lié, par exemple à la présence d'une antenne contacless.

Les modes de réalisations peuvent être nombreux et différents suivant des lecteurs de cartes.

Du coté des matériaux employés, il est possible d'utiliser des matières plastiques conductrices permettant «une décharge lente de la carte ». Il est possible de combiner ces polymères et des lames élastiques dans certains modes de réalisation. Il est également possible, dans un mode de réalisation particulier, de réaliser la pièce entièrement en tôle métallique.

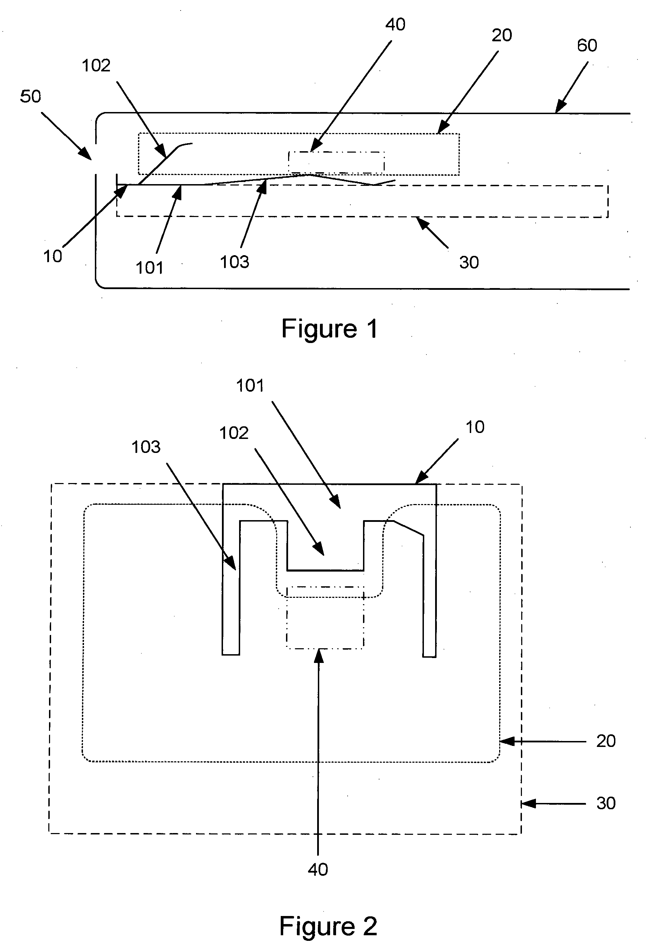

On présente, en relation avec les figures 1 et 2, la manière dont le dispositif est formé et la manière dont il se positionne dans le terminal une fois monté. Le dispositif de décharge électrostatique 10 est inséré dans un logement (50) d'un terminal de lecture (60) de l'élément électronique amovible (non représenté, par exemple une carte à puce). Comme précédemment explicité, le dispositif de décharge (10) comprend des moyens d'insertion dans ledit logement de lecture (50) postérieurement au montage dudit terminal de lecture (60).

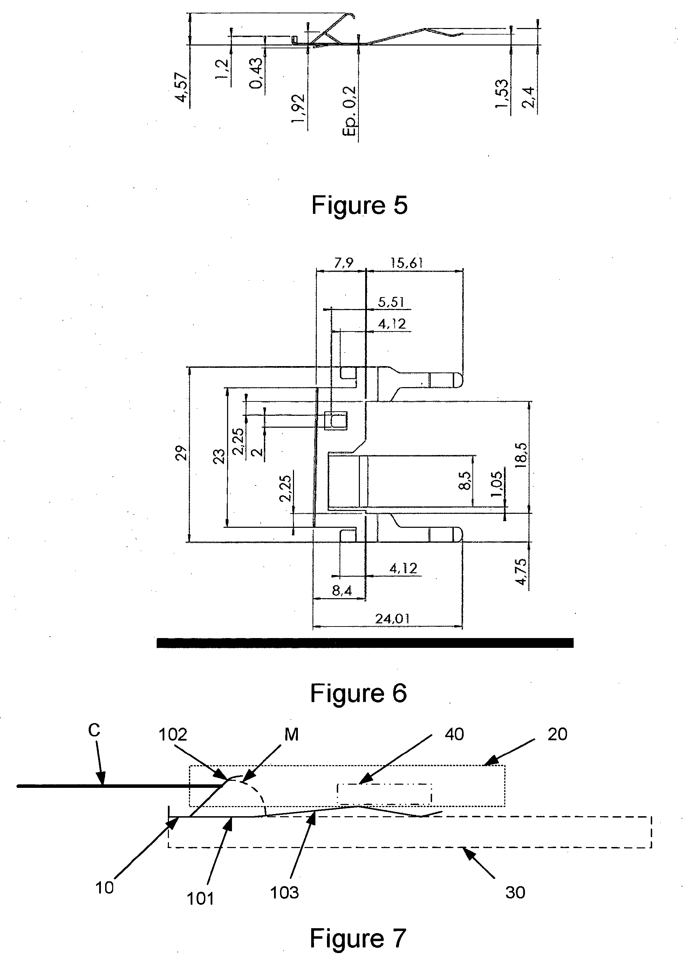

Plus particulièrement le dispositif de décharge (10), selon l'invention, se présente sous la forme d'une feuille, métallique ou plastique, comprenant une portion plane (101) et une pluralité de portions inclinées par rapport à cette portion plane (102, 103, etc.). Les portions inclinées par rapport au plan permettent d'insérer le dispositif dans un espace libre entre le lecteur CAM 20 et le circuit électronique 30 sur lequel le lecteur CAM 20 est positionné. Bien entendu, les figures 1 et 2 étant schématiques, elles ne comprennent pas les composants électroniques et les moyens de fixation du lecteur CAM 20 sur le circuit électronique 30. Selon une caractéristique particulière de l'invention, le dispositif comprend une zone de décharge 102. Cette zone de décharge 102 est conformée pour entrer en contact avec une portion significative de la surface de l'élément électronique amovible à insérer dans le lecteur. Dans le cas où l'élément électronique à insérer est une carte à puce, la zone de décharge est conformée pour entrer en contact avec la surface de la carte et avec la surface de la puce. Dans le cas où l'élément électronique à insérer est une clé USB, la zone de décharge est conformée pour entrer en contact avec la surface externe du connecteur de la clé USB. Come représenté dans les figures 5 et 6, la zone de décharge 102 permet de décharger l'électricité statique contenue dans l'élément électronique amovible préalablement à son entrée en contact avec les moyens de lecture/écriture de données 40.

### 5.2. Description d'un mode de réalisation

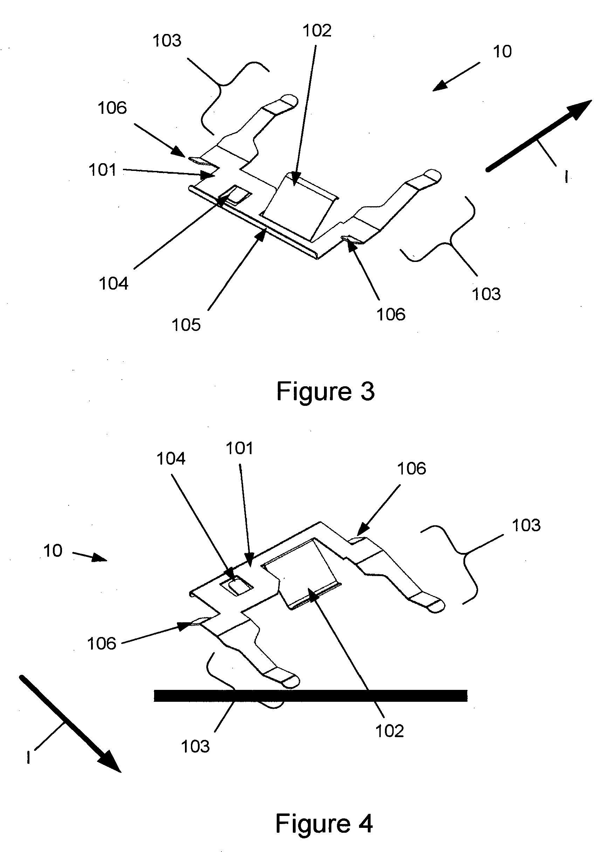

On présente, en relation avec les figures 3, 4, 5, 6 et 7 un mode de réalisation d'un dispositif de décharge électrostatique selon l'invention, adapté à une insertion dans un lecteur de carte à puce.

Dans ce mode de réalisation, le dispositif (10) se présente sous la forme d'une pièce métallique embossée qui peut être insérée dans un lecteur de carte à mémoire postérieurement au montage d'un terminal de paiement. La direction du montage est représentée par la flèche (I). Bien entendu, dans ce mode de réalisation, le dispositif de l'invention peut également être mise en place lors du montage du terminal en usine. Lorsqu'il est mis en place lors du montage du terminal, le dispositif ne nécessite pas de manipulation complexe. Par ailleurs, de part sa forme, le dispositif de l'invention est peu cher et facile à mettre en oeuvre. Ceci constitue une différence importante par rapport aux dispositifs de l'art antérieur qui sont combinés soit au lecteur de carte à puce soit au bloc de lecteur des données (comme par exemple dans la demande de brevet US20090253301).

Plus particulièrement, en relation avec les figures précitées, le dispositif de décharge, dans ce mode de réalisation comprend une surface sensiblement plane 101, formant la base du dispositif. De part et d'autre de cette base plane 101, s'étendent deux pattes d'insertion 103, dans la direction du montage (I). Ces deux pattes d'insertion 103 sont introduites en premier dans le logement 50 (c.f. figure 1 & 2). Elles comprennent chacune une pluralité de portions inclinées. L'objet de cette forme particulière est de permettre un certain maintien du dispositif (10) entre le lecteur CAM et le PCB une fois le dispositif inséré. De part et d'autre de la base plane 101 se situent également deux ergots de blocage 106. L'ergot de blocage 106 peut prendre position dans un orifice prévu à cet effet par exemple sur le PCB ou sur le lecteur CAM lorsque le dispositif est mis en place. Cependant, son orientation et son angle son tels que la fonction de blocage qu'il exerce peut être mise en oeuvre même en l'absence d'un tel orifice. Le dispositif comprend également une lèvre 105 formant un angle de 90° avec la base plane 101. Cette lèvre a deux fonctions : la première est d'offrir une certaine rigidité au dispositif 10. En effet, comme cela est indiqué en figure 5 et 6, le matériau employé pour fabrique le dispositif de l'invention, dans ce mode de réalisation a une épaisseur de 0,2 mm. Or cette épaisseur ne permet pas d'offrir une rigidité forte au dispositif. La lèvre 105 permet d'offrir une rigidité supplémentaire. Cette lèvre 105 est en outre utilisée pour pouvoir pousser le dispositif 10 lors de son insertion. En effet, le dispositif étant destiné à s'insérer dans un emplacement de petite taille, il est nécessaire de pouvoir le pousser dans cet emplacement. La présence de la lèvre permet d'utiliser un petit outil pour exercer une pression sur le dispositif, dans le sens de l'insertion (I) pour permettre l'introduction du dispositif dans l'emplacement disponible.

Le dispositif comprend également, dans ce mode de réalisation, une zone de décharge 102. Cette zone de décharge 102, comme explicité précédemment, permet la décharge électrostatique de la carte à puce lorsqu'elle est insérée dans le lecteur CAM. Plus particulièrement, l'angle conféré à cette zone de décharge 102 par rapport au plan de base 101 permet à la zone de décharge d'assurer deux fonctions : d'une part elle permet la décharge de la tranche de la carte à puce et d'autre part elle permet d'assurer une décharge de la puce en tant que telle. En effet, lors de l'insertion de la carte (C), celle-ci entre en contact par la tranche avec le dispositif de décharge, comme monter schématiquement en figure 7. La tranche de la carte entre en contact avec la zone de décharge 102. Au fur et à mesure de l'insertion de la carte, la zone de décharge est inclinée (du fait de la faible épaisseur du matériau constitutif du dispositif, une certaine élasticité existe et la zone de décharge 102 s'incline naturellement lors de l'insertion de la carte C. Dès lors, la surface de la carte qui comprend la puce entre également en contact avec la zone de décharge 102. Le mouvement d'inclinaison M est représenté par les pointillés en figure 7.

En d'autres termes, au début de l'insertion de la carte, une première étape de décharge a lieu, au cours de laquelle la tranche de la carte est déchargée. Lorsque l'on continue à insérer la carte, la puce et la surface de la carte entrent en contact avec la zone de décharge 102 et une deuxième étape de décharge à lieu, au cours de laquelle la surface de la carte et la puce entrent successivement en contact avec la zone de décharge 102 et sont donc déchargées.

Pour finir, le dispositif comprend également dans ce mode de réalisation une patte de mise en contact du dispositif à la masse 104. En effet, il est nécessaire que la charge électrostatique soit évacuée à la masse du terminal. Cette patte 104 permet de réaliser cette fonction. Bien entendu, dans d'autres modes de réalisation, l'une des pattes déjà présentée peut réaliser cette fonction.

La présentation qui a été faite du dispositif dans ce mode de réalisation de l'invention est purement indicative et correspond à une configuration particulière du dispositif de l'invention. Plus particulièrement, les mesures des figures 5 et 6 (dont l'unité de mesure est conventionnellement le millimètre - mm) sont données à titre purement indicatives et peuvent être modifiées sans qu'elles soient de nature à s'exclure de l'objet de la présente demande de brevet.

## Revendications

1. Dispositif amovible de décharge électrostatique (10) d'une carte à mémoire (C), ladite carte à mémoire étant destiné à être inséré dans un logement (50) d'un terminal de lecture (60) de ladite carte à mémoire (C), ledit dispositif de décharge (10) étant **caractérisé en ce qu'**il comprend :
- une portion sensiblement plane (101), formant la base dudit dispositif (10) ;
- une pluralité de portions inclinées par rapport à ladite portion plane (102, 103) ;
- des moyens d'insertion (105) dudit dispositif de décharge électrostatique (10) dans ledit logement (50) du terminal de lecture, lesdits moyens d'insertion (105) se présentant sous la forme d'une lèvre formant un angle de 90° avec ladite portion plane (101), ladite lèvre étant perpendiculaire au sens de l'insertion (I) dudit dispositif (10) dans le logement (50).

2. Dispositif selon la revendication 1, **caractérisé en ce que** lorsque ladite carte à mémoire est une carte à puce (C) et que ledit logement (50) offre un moyen d'accès à un lecteur de carte à mémoire (20), ledit dispositif de décharge (10) comprend au moins une zone de décharge (102) conformée pour entrer en contact avec une portion de la surface de la puce de ladite carte à puce (C).

3. Dispositif selon la revendication 2, **caractérisé en ce qu'**il comprend en outre au moins une zone de décharge (102) conformée pour entrer en contact avec une portion de la tranche de ladite carte à puce (C).

4. Dispositif selon la revendication 3, **caractérisé en ce qu'**il comprend en outre au moins un moins un ergot de blocage (106) dudit dispositif (10) de sorte que l'extraction dudit dispositif de décharge électrostatique, postérieurement à son insertion, nécessite le démontage dudit terminal de lecture.

5. Procédé de montage d'un dispositif de décharge électrostatique (10) selon la revendication 1, **caractérisé en ce que** ledit procédé comprend une étape d'insertion dudit dispositif (10) dans un espace libre entre un lecteur de carte à mémoire (20) et un circuit électronique (30) et une étape de blocage dudit dispositif (10) à l'aide d'au moins un ergot de blocage (106) dudit dispositif (10).

## Patentansprüche

1. Lösbare Vorrichtung zum elektrostatischen Entladen (10) einer Speicherkarte (C), wobei die Speicherkarte dazu bestimmt ist, in eine Aufnahme (50) eines Leseterminals (60) für die Speicherkarte (C) eingesetzt zu werden, wobei die Entladevorrichtung (10) **dadurch gekennzeichnet ist, dass** sie umfasst:
- einen im Wesentlichen ebenen Abschnitt (101), der das Unterteil der Vorrichtung (10) bildet;
- mehrere bezüglich des ebenen Abschnitts geneigte Abschnitte (102, 103);
- Mittel zum Einsetzen (105) der Vorrichtung zum elektrostatischen Entladen (10) in die Aufnahme (50) des Leseterminals, wobei die Mittel zum Einsetzen (105) die Form einer Lippe aufweisen, die mit dem ebenen Abschnitt (101) einen Winkel von 90° bildet, wobei die Lippe senkrecht zur Richtung des Einsetzens (I) der Vorrichtung (10) in die Aufnahme (50) ist.

2. Vorrichtung nach Anspruch 1, **dadurch gekennzeichnet, dass**, wenn die Speicherkarte eine Chipkarte (C) ist und die Aufnahme (50) ein Mittel zum Zugang zu einem Speicherkartenleser (20) bietet, die Entladevorrichtung (10) wenigstens einen Entladebereich (102) umfasst, der dazu ausgebildet ist, mit einem Abschnitt der Oberfläche des Chips der Chipkarte (C) in Kontakt zu kommen.

3. Vorrichtung nach Anspruch 2, **dadurch gekennzeichnet, dass** sie außerdem wenigstens einen Entladebereich (102) umfasst, der dazu ausgebildet ist, mit einem Abschnitt der Scheibe der Chipkarte (C) in Kontakt zu kommen.

4. Vorrichtung nach Anspruch 3, **dadurch gekennzeichnet, dass** sie außerdem wenigstens eine Rastnase (106) zur Arretierung der Vorrichtung (10) aufweist, derart, dass das Herausziehen der Vorrichtung zum elektrostatischen Entladen nach ihrem Einsetzen die Demontage des Leseterminals erfordert.

5. Verfahren zur Anbringung einer Vorrichtung zum elektrostatischen Entladen (10), **dadurch gekennzeichnet, dass** das Verfahren einen Schritt des Einsetzens der Vorrichtung (10) in einen freien Raum zwischen einem Speicherkartenleser (20) und einer elektronischen Schaltung (30) und einen Schritt der Arretierung der Vorrichtung (10) mithilfe wenigstens einer Rastnase (106) der Vorrichtung (10) umfasst.

## Claims

1. Detachable electrostatic discharge device (10) for a memory card (C), said memory card being intended to be inserted into a slot (50) of a read terminal (60) for said memory card (C), said discharge device (10) being **characterised in that** it comprises:
- a substantially flat portion (101), forming the base of said device (10);
- a plurality of portions (102, 103) that are inclined relative to said flat portion;
- means (105) for inserting said electrostatic discharge device (10) into said slot (50) of said read terminal, said insertion means (105) being in the form of a lip forming a 90° angle with said flat portion (101), said lip being perpendicular to the direction (I) for inserting said device (10) into said slot (50).

2. Device according to claim 1, **characterised in that** when said memory card is a chip card (C) and that said slot (50) provides a means of access for a memory card reader (20), said discharge device (10) comprises at least one discharge zone (102) designed to come into contact with a portion of the surface of the chip of said chip card (C).

3. Device according to claim 2, **characterised in that** it further comprises at least one discharge zone (102) designed to come into contact with a portion of the edge of said chip card (C).

4. Device according to claim 3, **characterised in that** it further comprises at least one tab (106) for locking said device (10), so that extracting said electrostatic discharge device, following its insertion, requires the disassembly of said read terminal.

5. Method for assembling an electrostatic discharge device (10) according to claim 1, **characterised in that** said method comprises a step of inserting said device (10) into a free space between a memory card reader (20) and an electronic circuit (30) and a step of locking said device (10) using at least one tab (106) for locking said device (10).
